**Europäisches Patentamt**

(19) **European Patent Office**

**Office européen des brevets**

(11) Veröffentlichungsnummer: **0 160 009**

**B1**

(12) **EUROPÄISCHE PATENTSCHRIFT**

(45) Veröffentlichungstag der Patentschrift:
**08.06.88**

(51) Int. Cl.⁴: **F 16 L 3/04,** F 24 D 3/14,
**F 16 B 15/00, B 25 C 5/16**

(21) Anmeldenummer: **84903528.2**

(22) Anmeldetag: **01.10.84**

(86) Internationale Anmeldenummer:
**PCT/CH 84/00162**

(87) Internationale Veröffentlichungsnummer:
**WO 85/01788 (25.04.85 Gazette 85/10)**

(54) **KLAMMER ZUM BEFESTIGEN VON ROHREN ODER STÄBEN UND VORRICHTUNG ZUM EINSTOSSEN DERARTIGER KLAMMERN.**

(30) Priorität: **17.10.83 CH 5625/83**

(43) Veröffentlichungstag der Anmeldung:
**06.11.85 Patentblatt 85/45**

(45) Bekanntmachung des Hinweises auf die Patenterteilung:
**08.06.88 Patentblatt 88/23**

(84) Benannte Vertragsstaaten:
**AT DE FR GB LU NL SE**

(56) Entgegenhaltungen:
**DE-A-3 007 979**
**FR-A-1 222 883**
**GB-A-6 493**
**GB-A-386 892**
**GB-A-496 207**
**US-A-1 329 268**
**US-A-1 855 471**
**US-A-2 714 207**

(73) Patentinhaber: **GREBER, Walter Paul, Herrenweg 12, CH- 4153 Reinach (CH)**

(72) Erfinder: **GREBER, Walter Paul, Herrenweg 12, CH-4153 Reinach (CH)**

## Beschreibung

Zum Befestigen eines Rohres, beispielweise eines Rohres einer Badenheizung, auf einem Isolier-Schaumstoff werden u-förmige Klammern mit Widerhacken verwendet, die durch die DE-A-3 007 979 und die GB-A-386 892 bekannt sind.

Zum Einstoßen solcher Klammern ist in DE-U-80 28 367 eine Vorrichtung mit einem Magazin zum Speichern derartiger Klammern beschrieben.

Ein wesentlicher Nachteil dieser Vorrichtung ist die geringe Aufnahmekapazität des Magazins, die sich daraus ergibt, dass die u-förmigen Klammern nur breitgestapelt werden können. Ausserdem ist das Einfüllen der Klammern in das Magazin sehr zeitaufwendig. Die Klammern können sich in dem gebogenen Teil des Magazins leicht verkanten, und kommt dadurch häufig zu Störungen.

Der Erfindung liegt die Aufgabe zugrunde, eine Klammer zu schaffen, welche es ermöglicht, die Aufnahmekapazität eines Magazins zu vervielfachen, schnelles Beladen des Magazins zu vereinfachen und Störungen in der Zufuhr zum Ausstoßschacht weitgehend auszuschließen.

Diese Aufgabe wird erfindungsgemäß mit einer Klammer gelöst, bei welcher die beiden mit Widerhacken versehenen, biegesteifen Schenkel im unbenutzten Zustand über zwei elastische Bänder und eine Mittelplatte auf gleicher Ebene gegenüberliegend miteinander verbunden sind und deren Mittelplatte so geformt ist, daß sich mehrere Klammern übereinander stapeln lassen. Des weiteren mit einer Vorrichtung zum Einstoßen der erfindungsgemäßen Klammer in welcher die in gestrecktem Zustand übereinander im Magazinschacht gestapelten Klammern durch einen Querschieber zum Ausstoßschacht verschoben werden und dabei mittels einer schiefen Ebene oder einem Formkanal zu u-förmigen Klammern gebogen werden. Dabei hält nur die Mittelplatte ihre waagrechte Lage bei.

Weitere vorteilhafte Ausbildungen ergeben sich aus den Ansprüchen 2, 3 und 5.

Nachfolgend wird die Erfindung anhand der Zeichnungen beispielweise beschrieben, dabei zeigt

Figur 1    die Draufsicht der erfindungsgemäßen Klammer in gestreckem, unbenutztem Zustand,

Figur 2    einen Schnitt durch die Klammer nach Schnittverlauf A - A

Figur 3    eine Seitenansicht der Klammer nach dem Querschieben vom Magazin-zum Ausstoßschacht und eingestoßen im Isolierschaumstoff und

Figur 4    einen Schnitt durch die Einstoßvorrichtung.

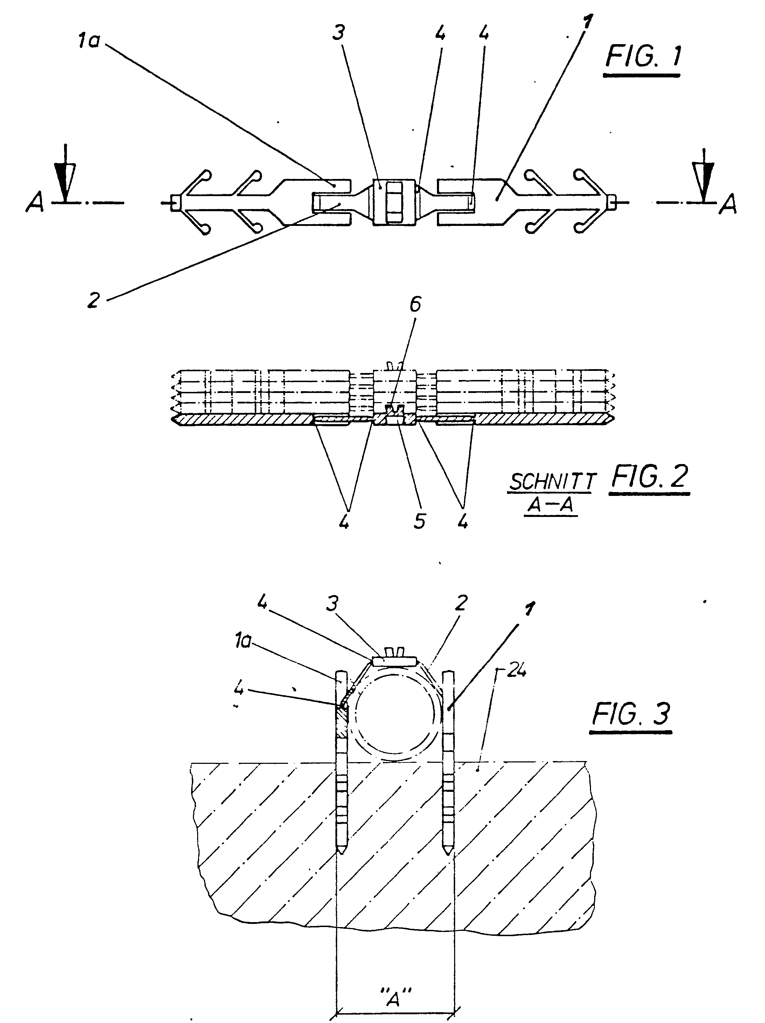

Die in Figur 1, 2 und 3 dargestellte Klammer besteht im wesentlichen aus zwei Schenkeln mit Widerhaken 1 , welche im unbenutzten Zustand auf einer Ebene durch ein Verbindungsstück miteinander verbunden sind. Dieses Verbindungsstück besteht im vorliegenden Beispiel aus einer Mittelplatte 3 mit zwei beidseitig anschließenden elestischen Bändern 2 mit an den Verbindungsstellen zur Mittelplatte 3 und zu den biegesteifen Schenkel 1 durch Materialeinschnürung bildeten Biegestellen 4.

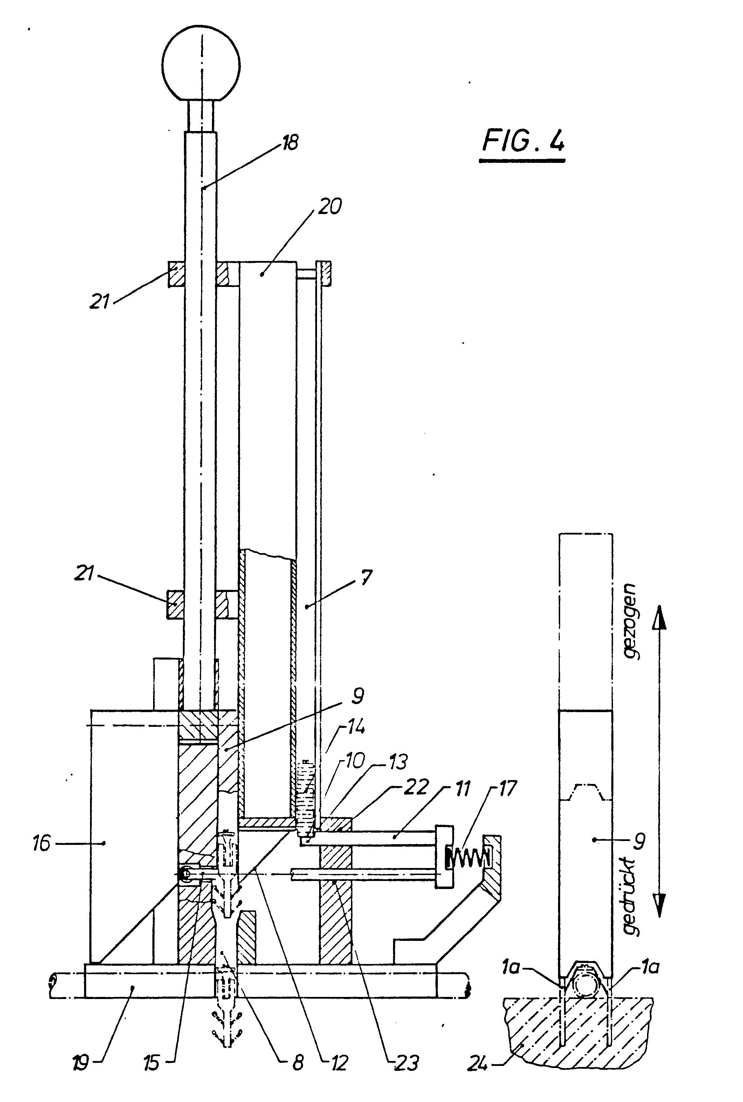

Diese Biegestellen 4 ermöglichen ein exakt vorgezeichnetes Abbiegen der vor dem Einstoßen der Klammer notwendigen U-Form (fig 3).

Die Kraft zum Einstoßen der beiden Schenkel in eine Schaumstoffunterlage 24 wird in die beiden, neben den beiden Bändern 2 außenliegenden biegesteifen, zum Schenkel 1 gehörende Stege 1 a eingeleitet.

Das Abstandsmaß "A" der beiden nach dem Biegen zur U-Form parallel stehenden Schenkel 1 ist in der Einstoßvorrichtung vorgegeben, und dementsprechend ergibt sich die abgewinkelte Lage der beiden Bänder 2 zur waagerecht in der Vorrichtung und rechtwinklig zu den Schenkel 1 liegenden Mittelplatte 3.

Die in den Figuren 1 und 2 dargestellte Klammer ist in der Unterseite der Mittelplatte 3 mit einer Ausnehmung 5 und in der Oberseite der Mittelplatte 3 mit einem mehrteiligen hinterschnittenen, in die Ausnehmung 5 passenden Vorsprung 6 versehen. Dadurch ist es möglich, die einzelnen noch ungebogenen Klammern zusammenzustecken und vorzustapeln. (Siehe Fig. 2)

Diese zu einem Block lösbar verbundenen Klammern können in das Magazin der nachfolgend beschriebenen Einstoßvorrichtung gesteckt werden.

Dabei kommen folgende Vorteile zur Geltung:
a) Große Mengen von Klammern finden im Magazin der Einstoßvorrichtung Platz.
b) Die Klammern verkanten nicht im Magazinschacht.

Zum Einstoßen der erfindungsgemäßen Klammern wird eine Einstoßvorrichtung benötigt, welche im wesentlichen aus einer zweiteiligen Grundplatte 19, einem darauf aufgebauten Tragrohr 20, einer Stoßrohrführung 21, einer Querschieberführung 22, einer Rollenstößelführung 23 und einem am Tragrohr befestigtem Magazinschacht 7 besteht.

Wenn ein Klammerblock in den Magazinschacht 7 der Vorrichtung eingelegt ist und die unterste Klammer des Blocks am Stützteil 13 des Querschiebers 11 aufliegt, ist die Vorrichtung geladen. Wird das Stoßrohr 18, mit welchem ein Leitlineal 16 und ein Klammerausstoßer 9 fest verbunden sind, hochgezogen, so wirkt die Druckfeder 17 auf den Querschieber 11. Dieser erfaßt mit dem Absatz zum Stützteil 13 die unterste, im Stützteil 13 aufliegende, noch geradlinige Klammer 10 und drückt diese, über zwei parallel zueinander angeordnete, abgeschrägten Platten 12, deren lichter Abstand dem Maß "A" der U-förmig gebogenen Klammer entspricht, bis sich die Klammer im Ausstoßschacht 7 unter dem jetzt darüberliegenden Ausstoßer 9 befindet. Der Querschieber 11 verhindert in diesem Zustand das Nachrutschen der nächsten Klammer 14. Wird nun das Stoßrohr 18 und das daran befestigte Leitlineal 16 mit dem ebenfalls damit verbundenen Ausstoßer 9 nach unten gedrückt, drückt der Ausstoßer 9 auf die Stege 1a der Schenkel 1 und schiebt die U-förmige Klammer durch den Ausstoßschacht 8 in das schaumstoffartige Isolationsmaterial 24.

Dabei wird über das Leitlineal 16 und den Rollenstößel 15 der Querschieber 11 zwangweise gegen die Federkraft der Druckfeder 17 zurückgeschoben, bis der Stützteil 13 wiederum so unter den Magazinschacht 7 steht, daß die nächstfolgenden Klammern um die Dicke einer Klammer nachrutschen können und somit die Nächstfolgende wiederum am Stützteil 13 aufliegt.

Der Ausstoßer 9 muß gegenüger der Oberkante des Querschiebers 11 in hochgezogener Stellung soweit über den Stegen 1a der beiden Schenkel 1 der Klammer stehen, bis der Stützteil 13 des Querschiebers 11 beim Drücken des Stoßrohres 18 und vor Berührung des Ausstoßers 9 mit der Klammer, den Ausstoßschacht 8 vollständig verlassen hat.

Die erfindungsgemässe Einstoßvorrichtung gewährleistet somit ein störungsfreies Nachrutschen der Klammern 14 und ein schnelles Betätigen.

## Patentansprüche

1. Klammer zum Befestigen von Rohren oder Stäben auf einer Schaumstoffunterlage oder ähnlichem Isoliermaterial, deren Schenkel (1) mit Widerhacken versehen sind, dadurch gekenntzeichnet, daß die beiden mit Widerhacken versehen, biegesteifen Schenkel(1) im unbenutzten Zustand über zwei elastische Bänder (2) und über eine biegesteife Mittelplatte (3) auf gleicher Ebene gegenüberliegend miteinander verbunden sind.

2. Klammer nach Anspruch 1 dadurch gekennzeichnet, daß die Bänder (2) mindestens an einem der Enden durch Materialverdünnung gebildete Biegestellen (4) aufweisen.

3. Klammer nach Anspruch 1 und 2 dadurch gekennzeichnet, daß die biegesteife Mittelplatte (3) auf einer Fläche mit einer Ausnehmung (5) und auf der gegenüberliegenden Fläche mit einem hinterschnittenen, ein - oder mehrteiligen Vorsprung (6) versehen ist, sodaß sich gleichgerichtete aufeinander geschichtete Klammern lösbar verbinden lassen.

4. Vorrichtung zum Einstoßen der Klammer nach einem der Ansprüche 1-3, mit einem parallel zur Ausstoßrichtung angeordneten Magazin (7) und einem Ausstoßschacht (8) mit einem darüber angeordneten Ausstoßer (9), dadurch gekennzeichnet, daß die in gestrecktem Zustand übereinander im Magazinschacht (7) gestapelte, unvorbenutzte Klammer (10) durch einen Querschieber (11) vom Magazinschacht (7) zum Ausstoßschacht (8) über eine schiefe Ebene (12) oder einen Formkanal verschoben und zu einer u-förmigen Klammer geformt wird und dabei nur die Mittelplatte (3) die waagrechte Lage beibehält.

5. Vorrichtung nach Anspruch 4, dadurch gekennzeichnet, daß zumindest die Bewegung des Querschiebers (11), vom Ausstoßschacht (8) zurück zum Magazinschacht (7), mit der Stoßbewegung des Stößels (9), welcher eine u-förmige Klammer über den Ausstoßschacht (8) in das Isoliermaterial (24) drückt, solange zwangesteuert ist, bis der Stützteil (13) des Querschiebers (11) unter dem Magazinschacht (7) steht und eine durch Schwerkraft nachfolgende Klammer (14) aufnehmen kann.

## Claims

1. Plastic clips for fastening pipes or rods on to a foam base or similar insulating material, the sides (1) of which have barbs attached to them and which are characterised by the fact that, before they are used, the two opposite barbed and stiff sides are connected by two supple plastic strips (2) with a stiff centre piece (3), all level with each other.

2. The clips as described in claim 1 are characterised by the fact that the plastic strips (2) are thinner at one end at least so that the material can be bent (4).

3. The clips as described in claims 1 and 2 are characterised by the fact that the stiff centre piece (3) has been hollowed out on one side (5) and the opposite surface has a cut-out protrusion (6) with one or more edges, so that the straight clips can be stacked on top of each other but still easily detached.

4. The mechanism used for ramming in the clips described in any one of the claims 1 - 3, has a magazine (7) parallel to the ejection path and an ejection shoot (8) with an ejector (9) at the top and is characterised by being formed in such a way, that the flat unused clips (10) are stacked in the magazine (7) one on top of the other and are carried by a sliding bar (II) from the magazine (7) to the ejection shoot (8) over an inclined plane (12) or forming channel and formed into a U-shaped clip while only the centre piece (3) remains in a horizontal position.

5. The mechanism as described in claim 4 is characterised by the fact that the movement of the sliding bar (11) from the ejection shoot (8) back to the magazine (7) is automatically governed by the action of the ejector (9) which rams the U-shaped clip through the ejection shoot (8) and into the insulating material (24) and forces the retaining bracket (13) of the sliding bar (11) back underneath the magazine, ready to take the next clip which drops down by force of gravity.

## Revendications

1. Des pinces en matière plastique pour fixer des tuyaux ou des baguettes sur une couche en mousse synthétique ou une matière isolante semblable, dont les branches (1) sont munies de crochets et qui sont caractérisées par le fait que les deux branches (1) semi-rigides, munies de crochets sont reliés, par deux bandes élastiques (2) et une plaque médiane (3) semi-rigide en face l'une de l'autre sur un même plan.

2. Des pinces caractérisées d'après la demande 1 par le fait que les bandes en plastique possèdent au moins à l'un des bouts des endroits flexibles (4), grâce à une moindre épaisseur du matérial.

3. Des pinces caractérisées d'après les demandes de brevet 1 et 2 par le fait que la plaque médiane (3) semi-rigide est munie sur une face d'une encoche (5) et sur la face opposée d'une saillie (6) découpée en un ou plusieurs tenons, de sorte que des pinces plates, rangées dans le même sens et disposées les unes sur les autres, peuvent être stockées tout en restant détachables.

4. Dispositif pour fixer la pince en la poussant d'après une des demandes de brevet 1 à 3, avec un magasin (7) disposé parallèlement à la direction d'expulsion et un canal d'expulsion (8) avec un expulseur (9). Ce dispositif est caractérisé par le fait que la pince (10) non encore utilisée, stockée à l'état plat dans le magasin (7) peut être déplacée au moyen d'un coulisseau transversal (11) depuis le magasin (7) vers le canal d'expulsion (8) en passant par un plan incliné (12) ou un canal qui la forme et où elle sera déformée en forme de "U", alors que seule la plaque médiane (3) garde sa position horizontale.

5. Dispositif d'après la demande de brevet 4, caractérisé par le fait qu'au moins le mouvement du coulisseau transversal (11) du canal d'expulsion (8) jusqu'aux magasin (7), simultanément avec le mouvement de l'expulsion (9), qui enfonce la pince en forme du "U" en passant par le canal d'expulsion (8) dans la matière isolante (24), est dirigé automatiquement aussi longtemps, jusqu'à ce que le tenon d'appui du coulisseau transversal (11) se trouve de nouveau sous le magasin (7) et peut recevoir la prochaine pince (14) qui descend par son propre poids.

0 160 009

FIG. 1

SCHNITT A-A  FIG. 2

FIG. 3

FIG. 4